# EUROPÄISCHE PATENTSCHRIFT

(11) **EP 0 363 809 B1**
(45) Veröffentlichungstag und Bekanntmachung des Hinweises auf die Patenterteilung: **18.08.1993**
(21) Anmeldenummer: 89118432.7
(22) Anmeldetag: 04.10.1989
(51) Int. Cl.: B65D 88/66, B65G 65/44

(54) **Vorrichtung zum Entladen von Behältern**
Device for unloading containers
Dispositif pour décharger des récipients

(30) Priorität: 08.10.1988 DE 3834339
(43) Veröffentlichungstag der Anmeldung: 18.04.1990
(73) Patentinhaber: Reissmann, Ulrich, Dipl.-Ing., D-38179 Schwülper (DE)
(72) Erfinder: Reissmann, Ulrich, Dipl.-Ing., D-38179 Schwülper (DE)
(74) Vertreter: Lins, Edgar, Dipl.-Phys. Dr.jur.

(56) Entgegenhaltungen:
- EP-A- 0 010 182
- EP-A- 0 282 958
- GB-A- 2 076 934
- US-A- 3 854 612
- US-A- 4 310 106

## Beschreibung

Die Erfindung betrifft eine Vorrichtung zum Entladen von mit schüttbarem Stückgut beladenen Behältern, insbesondere von Behältern, deren Gewicht im beladenen Zustand ein Vielfaches des Leergewichts beträgt, mit einem stationären Maschinenrahmen, einem gegenüber dem Maschinenrahmen bewegbaren Schwingrahmen und einem schräg zum Schwingrahmen angeordneten Vibrationsantrieb für den Schwingrahmen.

Das Entladen von Normhehältern, beispielsweise Euro-Gitterboxen, mit in einer Fertigung benötigten Teilen erfolgt in bekannter Technik mit Hilfe von Magneten, sofern die Teile magnetisierbar sind, oder durch Auskippen der Behälter. Da die Behälter im beladenden Zustand ein Gewicht von mehreren Tonnen aufweisen können, ist für das Kippen eine aufwendige Hebevorrichtung erforderlich. Die Entladung erfolgt dabei komplett, so daß eine dosierte Entleerung praktisch nicht möglich ist. Dies gilt auch für die magnetische Entnahme, durch die zwar der Behälter nicht vollständig entleert werden muß, eine echte Dosierung in Form einer kontinuierlichen gleichmäßigen Zuführung jedoch auch nicht möglich ist. Alle bekannten Entleerungsverfahren führen darüber hinaus zu einer erheblichen Geräuschbelästigung.

Eine Vorrichtung der eingangs erwähnten Art ist durch GB-A-2076934 bekannt. Der dabei entladene Behälter weist einen im Boden angeordneten Entleerungstrichter auf, der in einer mittigen Entleerungsöffnung endet. Durch die Schwingvorrichtung wird die durch das Gewicht des Schüttgutes verursachte Entleerung des Behälters unterstützt, indem das Schüttgut in einen fließfähigen Zustand versetzt wird. Der pneumatisch gesteuerte Vibrator ist dabei sowohl in seiner Frequenz als auch in seiner Amplitude voreinstellbar.

Eine ähnliche Vorrichtung ist aus US-A-3,854,612 bekannt. Auch hier ist ein Behälter fest an einem Schwingrahmen montiert und für eine Bodenentleerung über einen Entleerungstrichter ausgebildet. Der Vibrationsantrieb besteht dabei aus mehreren Vibratoren. Über einen Näherungsschalter wird die Vibrationsamplitude daraufhin überprüft, ob eine vorbestimmte Maximalamplitude überschritten wird. Ist dies beispielsweise nach einer teilweisen Entleerung des Behälters der Fall, wird einer oder mehrere der Vibrationsantriebe abgeschaltet, so daß die Vibration dann mit einer wieder verringerten Amplitude erfolgt.

Der Erfindung liegt die Aufgabe zugrunde, eine Vorrichtung zum Entladen von Behältern der eingangs erwähnten Art zu erstellen, die eine geräuscharme und kontinuierliche dosierte Entleerung der Behälter ermöglicht.

Zur Lösung dieser Aufgabe weist eine Vorrichtung der eingangs erwähnten Art folgende Merkmale auf:
- eine am Schwingrahmen vorgesehene Aufnahmeplattform mit Haltevorrichtungen für die Festlegung der Behälter auf der Aufnahmeplattform,
- eine niederfrequente, deutlich unter 50 Hz liegende Anregungsfrequenz des Vibrationsantriebs, und
- eine Regelschaltung zur Regelung der Schwingungsamplitude in einem vorbestimmten Amplitudenbereich und zur Begrenzung der vertikalen Beschleunigungskomponente der Vibration auf ≦ 2 g.

Mit der erfindungsgemäßen Vorrichtung wird die Entleerung der Behälter mit einem von Vibrationsförderern bekannten Vibrationsantrieb durchgeführt. Während bisher Vibrationsförderer direkt auf die zu fördernden Teile einwirkten und regelmäßig Mikrowürfe dieser Teile verursachten, wird bei der erfindungsgemäßen Vorrichtung die Vibration auf eine gesamte, in dem Behälter unter Umständen weit von der schwingenden Plattform entfernte Masse von schüttbaren Schüttgütern ausgeübt. Für die Anwendung der Vibrationstechnik auf die Entleerung von Behältern müssen erfindungsgemäß Randbedingungen eingehalten werden, die die Handhabung unter Umständen großer Gewichte und Gewichtsunterschiede ermöglichen. Hierzu gehört eine niederfrequente Anregung des Schwingrahmens, die Regelung der Schwingungsamplitude sowie die Begrenzung der Beschleunigung in vertikaler Richtung auf ≦ 2g. Unter einer niederfrequenten Anregung wird bei Vibrationsförderern eine Anregung mit einer Frequenz verstanden, die deutlich unter der bisher üblichen Anregungsfrequenz von 50 Hz oder 60 Hz liegt. Bevorzugt findet die Anregung zwischen 10 Hz und 20 Hz statt. Die Regelung der Schwingungsamplitude ermöglicht einen konstanten Betrieb auch bei stark unterschiedlichen Nutzmassen, wodurch eine kontinuierliche dosierte Entleerung des Behälters erst möglich ist. Die Begrenzung der vertikalen Beschleunigungskomponente ermöglicht eine kontrollierte Beherrschung auch großer Gewichte und die Verwendung üblicher, gering dimensionierter Haltevorrichtungen für die Behälter, da die den Behälter selbst bewegenden Kräfte gering sind. Begrenzt man die vertikale Beschleunigungskomponente in einer bevorzugten Ausführungsform auf ≦ g, findet prinzipiell überhaupt keine relative Behälterbewegung zur Aufnahmeplattform mehr statt und die Haltevorrichtungen könnten an sich entfallen. Aus Sicherheitsgründen werden die Haltevorrichtungen dennoch vorgesehen. Sie müssen aber nicht zur Aufnahme großer Kräfte dimensioniert sein.

Vorteilhaft ist es, wenn auch die Frequenz auf die sich ändernde Nutzmasse automatisch einstellbar ist. In einer besonders bevorzugten Ausführungsform findet die Vibrationsanregung auf der Resonanzfrequenz der Nutzmasse statt. Da beim Entleeren des Behälters die Resonanzfrequenz ständig variiert, wird in diesem Fall die Vibrationsfrequenz ständig nachgeführt.

Die erfindungsgemäße Vorrichtung eignet sich zum Entladen von üblichen Behältern, die an ihrer Unterseite in einer Behälterseitenwand geöffnet werden können, so daß die Entleerung über den, gegebenenfalls schräg gestellten, Behälterboden erfolgt. Die erfindungsgemäße Vorrichtung läßt sich aber auch für eine kippende Entleerung von oben offenen Behältern verwenden, wenn sie mit einem im Schwingrahmen angeordneten Kipprahmen versehen ist, der mittels eines Hydraulikzylinders um ein am Schwingrahmen befestigtes Drehgelenk relativ zum Schwingrahmen kippbar ist und die Aufnahmeplattform und die Haltevorrichtungen aufweist. In dieser Ausführungsform befindet sich die Kippvorrichtung am Schwingrahmen, unterliegt also den Vibrationen, die die Entleerung bewirken. Der Hydraulikzylinder wirkt dabei in dem infrage kommenden Frequenzbereich als starres Teil.

In allen Fällen ist es vorteilhaft, einen am Schwingrahmen befestigten Zwei-Massen-Schwinger zu verwenden und eine schwingungsentkoppelte Verbindung zwischen Schwingrahmen und Maschinenrahmen vorzusehen. Auf diese Weise wird der Maschinenrahmen weitgehend von Schwingungen freigehalten.

Die im Rahmen der vorliegenden Erfindung angewendete Regelung der Schwingungsamplitude und der Beschleunigung der Nutzmasse ist für einen Schwingförderer aus der DE-OS 36 44 811 bekannt. Der Regelmechanismus hat dabei allerdings die Funktion, die in der Resonanzfrequenz der Nutzmasse angeregte Schwingung zu begrenzen und kontrollierbar zu halten. Eine Kompensation von großen Massenänderungen mit der Regelung ist dabei nicht vorgesehen.

Die Erfindung soll im folgenden anhand von in der Zeichnung dargestellten Ausführungsbeispielen näher erläutert werden. Es zeigen:
- Figur 1: - eine Seitenansicht einer Entladevorrichtung für im Bodenbereich entladbare Behälter
- Figur 2: - eine Draufsicht auf die Anordnung gemäß Figur 1
- Figur 3: - eine Seitenansicht einer Entladevorrichtung mit einer Kippeinrichtung
- Figur 4: - eine Rückansicht der Vorrichtung gemäß Figur 3.

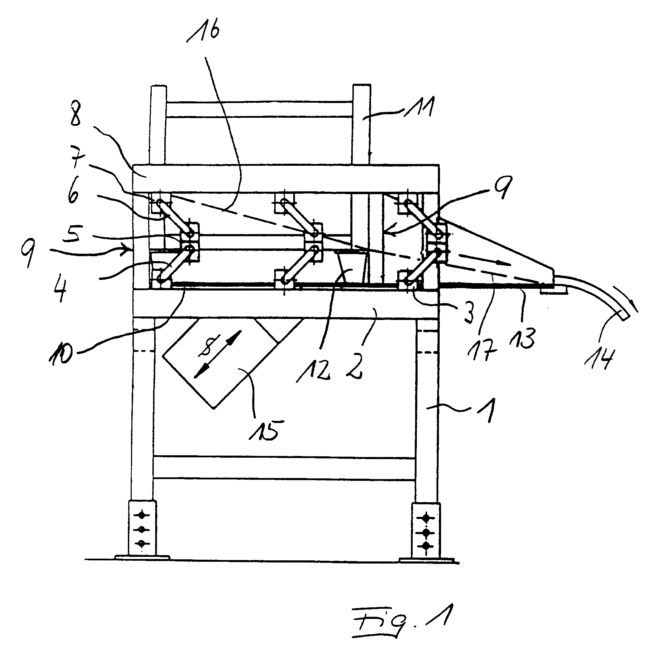

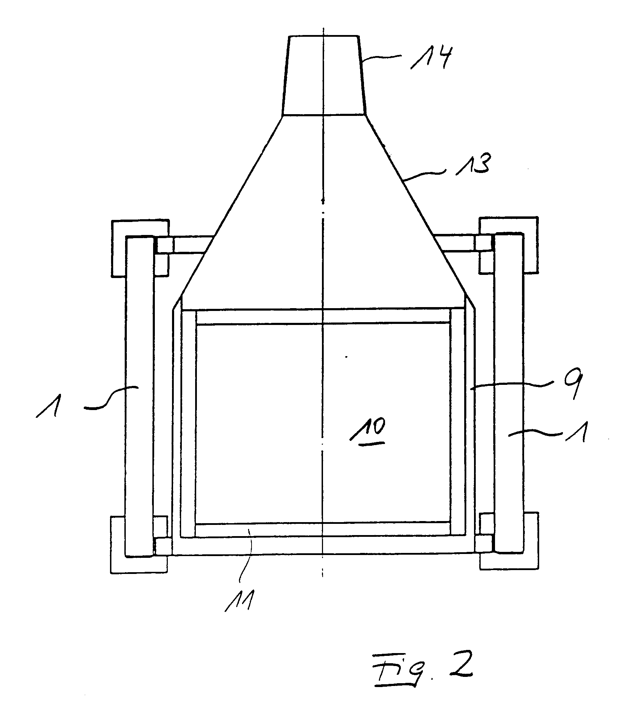

Die in den Figuren 1 und 2 dargestellte Vorrichtung weist einen ortsfesten Maschinenrahmen 1 auf, der an seiner Oberseite mit Traversen 2 abgeschlossen ist. An der Oberseite der Traversen befinden sich elastische Gelenke 3, in denen jeweils ein Lenker 4 gegen eine Rückstellkraft drehbar ist. Die oberen Enden der Lenker 4, die etwa in einem Winkel von 45° von der Traverse 2 schräg nach oben zeigen, ist in einem Doppelgelenkblock 5 gelagert, in dem auch obere Lenker 6 enden, die mit den unteren Lenkern 4 jeweils ein Lenkerpaar 4,6 bilden. Die oberen Lenker 6 sind in oberen elastischen Gelenkblöcken 7 gelagert, die an einer oberen Traverse 8 eines Schwingrahmens 9 befestigt sind. Der Schwingrahmen 9 ist nur über die schwingungsdämpfenden Lenkerverbindungen 3 bis 7 mit dem Maschinenrahmen 1 verbunden. Der Schwingrahmen weist eine Aufnahmeplattform 10 auf, auf der ein Normbehälter 11 mit Füßen 12 steht. Die Aufnahmeplattform 10 setzt sich auf einer Seite in eine Auslaßrinne 13 fort, die sich zu ihrem freien Ende hin trichterförmig verjüngt und in eine schmale Abgabebahn 14 mündet.

An der Unterseite des Schwingrahmens 9 ist ein Vibrationsantrieb 15 befestigt, der ein übliches Masse-Feder-System sowie eine Gegenmassen aufweist. Aufgrund der Gegenmasse ist der Vibrationsantrieb 15 in der Lage, den Schwingrahmen 9 in Schwingungen zu versetzen, obwohl er nicht an einem ortsfesten Rahmen, wie beispielsweise dem Maschinenrahmen 1, montiert ist. Der Vibrationsantrieb 15 steht in dem dargestellten Ausführungsbeispiel in einem Winkel von 45° zur Lotrechten und regt somit den Schwingrahmen 9 und die damit verbundene Aufnahmeplattform 10 in dieser Richtung zum Schwingen an. Die in dem Behälter 11 enthaltenen Teile erfahren eine dementsprechend gerichtete Beschleunigung, so daß die Teile gegen eine vordere Behälterwand laufen.

In dem dargestellten Ausführungsbeispiel 11 ist der Behälter für eine Bodenentleerung geöffnet. Darüber hinaus weist er zur Unterstützung der Entleerung einen Schrägboden 16 auf, der sich in einen schrägen Boden 17 des Auslauftrichters 13 fortsetzt. Aufgrund der schräggerichteten Anregung des Schwingrahmens 9 durch den Vibrationsantrieb 15 ist aber auch eine Entleerung eines Behälters 11 mit einem horizontalen Boden ohne weiteres möglich. Der Schrägboden 16 vergrößert lediglich die Entleerungsgeschwindigkeit.

Durch eine (nicht dargestellte) Regelung der Schwingungsamplitude und der Beschleunigung der durch den Schwingrahmen 9, den Behälter 11 und dessen Füllung gebildete Nutzmasse wird eine kontrollierte und kontinuierliche Entladung des Behälters 11 während des gesamten Entladevorganges erzielt, bei dem die Masse des Behälters beispielsweise von 1 bis 2 t auf 75 kg reduziert wird, wenn beispielsweise eine Euro-Gitterbox von schweren Teilen, wie Schrauben o. ä., entleert wird.

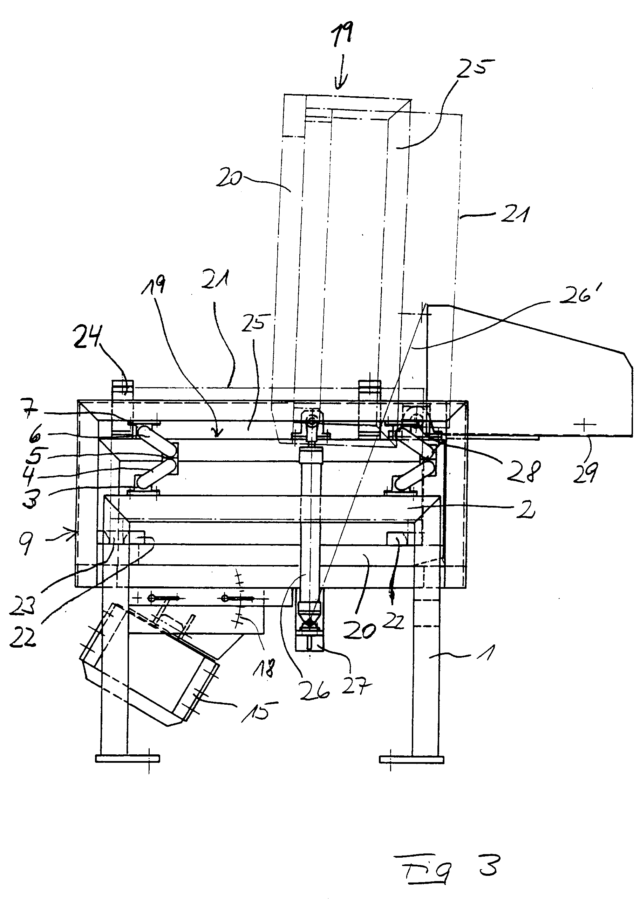

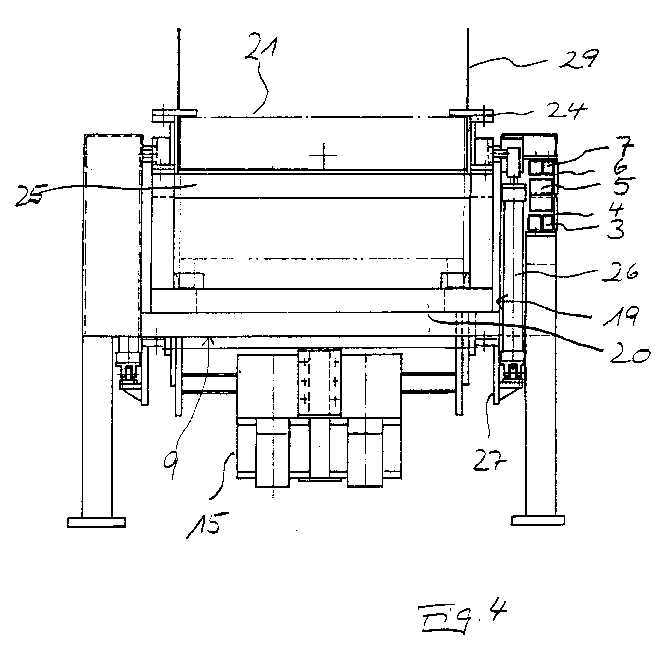

Die in den Figuren 3 und 4 dargestellte Anordnung weist ebenfalls einen Maschinenrahmen 1 auf, der an seiner Oberseite durch Traversen 2 abgeschlossen ist. Über eine gleiche schwingungsdämpfende Verbindung 3 bis 7 ist ein Schwingrahmen 9 mit dem Maschinenrahmen 1 verbunden. Ein Vibrationsantrieb ist an der Unterseite des Schwingrahmens 9 befestigt. Durch eine Skala 18 ist angedeutet, daß die Neigung des Vibrationsantriebs 15 zur Lotrechten bzw. zum Boden des Schwingrahmens 9 einstellbar ist.

Innerhalb des Schwingrahmens 9 ist ein Kipprahmen 19 angeordnet, auf dessen Boden 20 ein mit strichpunktierten Linien dargestellter Behälter 21 gelagert ist. Auf dem Boden 20 sind zentriert Erhebungen 22 für die Aufnahme von Behälterfüßen 23 vorgesehen. Der Behälter wird an der Oberseite durch Klemmpratzen 24 gehalten, die an einer oberen Traverse 25 befestigt sind. Mit der oberen Traverse 25 ist auf zwei gegenüberliegenden Seiten jeweils ein Hydraulikzylinder 26 drehbar verbunden, dessen unteres Ende an einer Lasche 27 des Schwingrahmens 9 drehbar angelenkt ist. Die obere Traverse 25 des Kipprahmens 19 ist ferner an einem vorderen Ende des Schwingrahmens 9 über ein Drehgelenk 28 mit dem Schwingrahmen verbunden. An dem vorderen Ende ist am Schwingrahmen 9 ein Auslauftrichter 29 angebracht.

In Figur 3 ist der Kipprahmen 19 in seiner horizontalen Stellung im Schwingrahmen 9 mit durchgezogenen Linien dargestellt. Durch Ausfahren des Hydraulikzylinders 26 wird der Kipprahmen 19 - und damit der in ihm gelagerte Behälter 21 - um das Drehgelenk 28 nach oben gekippt. Die obere Endstellung, die dem voll ausgefahrenen Hydraulikzylinder 26 entspricht, ist in Figur 3 strichliert angedeutet. Die Lage des Hydraulikzylinders 26 ist in dieser Stellung durch seine Achse 26′ charakterisiert.

Durch ein allmähliches Anheben des Kipprahmens 19 mit dem Behälter 21 während der ständigen Vibration des Schwingrahmens 19 - und somit auch des Behälters 21 - wird eine dosierte Abgabe der in dem Behälter 21 eingefüllten Stückgüter über die obere Kante des Behälters 21 in den Auslauftrichter 29 hinein erreicht. Da der Auslauftrichter 29 ebenfalls mitschwingt, ergibt sich eine dosierte, gegebenenfalls auch zur Vereinzelung geeignete Förderung der Teile des Behälters 21.

Durch die dargestellten Vorrichtungen ist es möglich, einen kompletten Arbeitsgang bei der Behandlung der Teile zu ersparen. Während in der bekannten Technik der Transportbehälter ausgeleert und die Teile in eine Zuführungseinrichtung zumgefüllt worden sind, um sie einer Fertigungseinrichtung zuzuführen, kann mit einer erfindungsgemäßen Vorrichtung die Zuführung unmittelbar aus dem Behälter 21 heraus erfolgen.

## Patentansprüche

1. Vorrichtung zum Entladen von mit schüttbarem Stückgut beladenen Behältern (21), insbesondere von Behältern (21), deren Gewicht im beladenen Zustand ein Vielfaches des Leergewichts beträgt, mit einem stationären Maschinenrahmen (1), einem gegenüber dem Maschinenrahmen (1) bewegbaren Schwingrahmen (9) une einem schräg zum Schwingrahmen (9) angeordneten Vibrationsantrieb (15) für den Schwingrahmen, **gekennzeichnet durch**
- eine am Schwingrahmen (9) vorgesehene Aufnahmeplattform (10, 20) mit Haltevorrichtungen (24) für die Festlegung der Behälter auf der Aufnahmeplattform (10),
- eine niederfrequente, deutlich unter 50 Hz liegende Anregungsfrequenz des Vibrationsantriebs (15) und
- eine Regelschaltung zur Regelung der Schwingungsamplitude in einem vorbestimmten Amplitudenbereich und zur Begrenzung der vertikalen Beschleunigungskomponente der Vibration auf ≦ 2 g.

2. Vorrichtung nach Anspruch 1, bei der die Vibrationsfrequenz zwischen 10 Hz und 20 Hz liegt.

3. Vorrichtung nach Anspruch 1 oder 2 mit einem im Schwingrahmen (9) angeordneten Kipprahmen (19), der mittels eines Hydraulikzylinders (26) um ein am Schwingrahmen (9) befestigtes Drehgelenk (29) relativ zum Schwingrahmen (9) kippbar ist und die Aufnahmeplattform (20) und die Haltevorrichtungen (24) aufweist.

4. Vorrichtung nach einem der Ansprüche 1 bis 3 mit einem am Schwingrahmen (9) befestigten Zwei-Massen-Schwinger (15) und einer schwingungsentkoppelnden Verbindung (3,4,5,6,7) zwischen Schwingrahmen (9) und Maschinenrahmen (1).

5. Vorrichtung nach einem der Ansprüche 1 bis 4, bei der die vertikale Beschleunigungskomponente auf ≦ g begrenzt ist.

6. Vorrichtung nach einem der Ansprüche 1 bis 5, dadurch gekennzeichnet, daß die Vibrationsfrequenz in Abhängigkeit von dem Gewicht des Behälters (21) änderbar ist.

7. Vorrichtung nach Anspruch 6, gekennzeichnet durch eine Regelschaltung zur Regelung der Vibrationsfrequenz auf die Resonanzfrequenz der aus Schwingrahmen (9) und Behälter (21) gebildeten Nutzmasse.

## Claims

1. Device for unloading containers (21) loaded with loose discrete articles, particularly containers (21) of which the weight in the loaded state is a multiple of the empty weight, with a stationary machine frame (1), a vibrating frame (9) which is movable relative to the machine frame (1) and a vibration drive (15) for the vibrating frame (9), the said vibration drive being arranged at an angle to the vibrating frame, characterised by
- a receiving platform (10, 20) which is provided on the vibrating frame (9) and has retaining devices (24) for fixing the container on the receiving platform (10),
- a low excitation frequency, markedly below 50 Hz, for the vibration drive (15), and
- a control circuit for controlling the vibrational amplitude in a predetermined amplitude range and for limiting the vertical acceleration component of the vibration to ≦ 2 g.

2. Device according to Claim 1, in which the vibration frequency is between 10 Hz and 20 Hz.

3. Device according to Claim 1 or 2, with a tipping frame (19) which is arranged in the vibrating frame (9) and can be tipped relative to the vibrating frame (9) by means of a hydraulic cylinder (26) about a hinge joint (29) fixed on the vibrating frame (9), the said tipping frame (19) bearing the receiving platform (20) and the retaining devices (24).

4. Device according to one of Claims 1 to 3, with a two-weight vibrator (15) fixed on the vibrating frame (9) and a vibration decoupling connection (3, 4, 5, 6, 7) which is located between the vibrating frame (9) and the machine frame (1).

5. Device according to one of Claims 1 to 4, in which the vertical acceleration component is limited to ≦ g.

6. Device according to one of Claims 1 to 5, characterised in that the vibration frequency can be changed as a function of the weight of the container (21).

7. Device according to Claim 6, characterised by a control circuit for adjusting the vibration frequency to the resonant frequency of the effective mass formed by the vibrating frame (9) and the container (21).

## Revendications

1. Dispositif de déchargement de récipients (21) contenant des pièces déversables et, en particulier, de récipients (21) dont le poids à l'état rempli atteint un multiple du poids à vide, avec un châssis de machine fixe (1), un châssis vibrant (9) mobile par rapport au châssis de machine (1) et une commande de vibration à basse fréquence (15) disposée obliquement par rapport au châssis vibrant (9) pour le châssis vibrant, caractérisé par
- une plate-forme de réception (10, 20) prévue sur le châssis vibrant (9), avec des dispositifs de fixation (24) pour maintenir les récipients sur la plate-forme de réception (10),
- une commande de vibration à basse fréquence (15) disposée obliquement par rapport au châssis vibrant (9) pour le châssis vibrant, dont la fréquence d'excitation est nettement inférieure à 50 Hz,
- un circuit de régulation pour régler l'amplitude des vibrations dans une gamme d'amplitudes prédéterminée et pour limiter la composante d'accélération verticale des vibrations à ≦ 2 g.

2. Dispositif selon la revendication 1, dans lequel la fréquence de vibrations se situe entre 10 Hz et 20 Hz.

3. Dispositif selon la revendication 1 ou 2, avec un châssis basculant (19) monté dans le châssis vibrant (9), ce châssis basculant pouvant basculer au moyen d'un cylindre hydraulique (26) autour d'une articulation pivotante (29) fixée au châssis vibrant (9) par rapport au châssis vibrant (9) et qui présente la plate-forme de réception (20) et les dispositifs de fixation (24).

4. Dispositif selon l'une des revendications 1 à 3, avec un oscillateur à deux masses (15) fixé au châssis vibrant (9) et un assemblage (3, 4, 5, 6, 7) à découplage des vibrations entre le châssis vibrant (9) et le châssis de machine (1).

5. Dispositif selon l'une des revendications 1 à 4, dans lequel la composante verticale de l'accélération est limitée à ≦ g.

6. Dispositif selon l'une des revendications 1 à 5, caractérisé en ce que la fréquence de vibrations peut être modifiée en fonction du poids du récipient (21).

7. Dispositif selon la revendication 6, caractérisé par un circuit de régulation pour régler la fréquence des vibrations à la fréquence de résonance de la masse à traiter formée par le châssis vibrant (9) et le récipient (21).
